# FASCICULE DE BREVET EUROPEEN

(11) **EP 1 907 750 B1**
(45) Date de publication et mention de la délivrance du brevet: **03.07.2013**
(21) Numéro de dépôt: 06778885.1
(22) Date de dépôt: 19.07.2006
(51) Int. Cl.: F17C 1/06, F17C 1/08, F17C 1/16

(54) **RESERVOIR EN MATERIAU COMPOSITE, NOTAMMENT POUR STOCKER DU GAZ NATUREL POUR VEHICULE**
VERBUNDMATERIALBEHÄLTER ZUR LAGERUNG VON ERDGAS FÜR EIN FAHRZEUG
COMPOSITE MATERIAL RESERVOIR FOR STORING NATURAL GAS FOR VEHICLE

(30) Priorité: 19.07.2005 FR 0507647
(43) Date de publication de la demande: 09.04.2008
(73) Titulaire: DJP, 94400 Vitry sur Seine (FR)
(72) Inventeur: MATTEÏ, Jean-Pierre, F-94210 La Varenne Saint Hilaire (FR)
(74) Mandataire: Pontet, Bernard
(86) Numéro de dépôt international: PCT/FR2006/001763
(87) Numéro de publication internationale: WO 2007/010136

(56) Documents cités:
- DE-A1- 2 931 947
- DE-A1- 19 749 950
- FR-A- 2 764 671
- FR-A- 2 783 034
- FR-A- 2 796 010
- US-A- 4 724 293
- US-A- 5 787 920
- US-A1- 2004 172 803

## Description

La présente invention se rapporte à un réservoir en matériau composite. Elle concerne particulièrement un réservoir embarqué sur un véhicule, et plus particulièrement un réservoir pour y contenir du Gaz Naturel pour Véhicule (ci-après GNV), utilisé pour l'alimentation énergétique d'un véhicule automobile.

Des réservoirs en matériau composite sont notamment décrits dans le document FR 2 764 671. Ces réservoirs sont particulièrement prévus et avantageux pour y stocker du gaz de pétrole liquéfié (GPL). Ils sont traversés par des arbres, pleins ou creux, pour augmenter la résistance du réservoir aux fortes pressions de stockage du GPL (20 bars, soit 2 MPa).

Il apparaît que le GNV peut être une alternative avantageuse au GPL. Notamment, il peut permettre à tout particulier d'avoir à domicile sa propre station de remplissage équipée d'un simple compresseur raccordé au réseau de gaz de ville. Cependant, le GNV, en plus d'occuper un volume plus important, environ double, pour la même capacité énergétique, est stocké sous forme gazeuse à une pression plus élevée (200 bars, soit 20 MPa) que le celle du GPL. En outre, ces pressions ne comprennent pas la marge de sécurité dont il est nécessaire et d'usage de se munir. Pour tenir compte de ces marges, un réservoir contenant du GNV doit pouvoir tenir une pression de 500 bars.

Par ailleurs on connaît via les documents FR 2 796 010 A1, US 2004/172803 A1, DE 29 31 957 et US 4 724 293 des réservoirs comprenant des enceintes internes traversées par des arbres. Toutefois, les arbres de ces réservoirs sont des éléments rapportés, en matériaux non composites coopérant avec des enceintes en matériau composite, ce qui peut poser des problèmes d'intégration et de reprise d'effort des parties structurantes entre elles.

Les réservoirs de l'art antérieur ne sont donc pas adaptés au stockage de GNV à bord d'un véhicule automobile.

Le but de l'invention est de proposer un réservoir, qui permette, sans réduire notablement l'espace utile dans le véhicule, de stocker un volume de GNV correspondant à une autonomie au moins aussi importante que celle procurée par du GPL stocké dans les réservoirs de l'art antérieur.

Dans la présente description, un arbre creux est nommé "puits". Un puits peut contenir un fluide dans son creux.

Selon un premier objet de l'invention, un tel réservoir, comprend une enceinte interne pour y stocker un fluide, par exemple du GNV, ladite enceinte comprenant une première paire de parois en vis-à-vis reliées intérieurement par au moins un premier arbre, et au moins une deuxième paire de parois en vis-à-vis reliées intérieurement par au moins un deuxième arbre, ledit premier arbre s'étendant selon une première direction et ledit deuxième arbre s'étendant selon une deuxième direction différente de la première. De préférence, pour une meilleure résistance, le réservoir peut comprendre au moins une troisième paire de parois en vis-à-vis reliées intérieurement par au moins un troisième arbre, ledit premier arbre s'étendant selon une troisième direction différente de la première direction et de la deuxième direction.

Un tel réservoir peut servir à stocker un fluide à une pression différente de celles utilisées pour du GNV, tel que de l'hydrogène à une pression de 350 bars et plus en valeur nominale ou à une pression comprise entre 700 et 1000 bars en rupture.

Avantageusement ce réservoir sera en matériau composite, et présentera un rapport pression/poids très avantageux. L'utilisation de fibres de carbone, pour le matériau composite, permet d'optimiser ce rapport.

Pour une meilleure reprise des efforts sur les parois par les arbres qui les relient, lorsque les parois d'une paire de parois en vis-à-vis sont parallèles entre elles, au moins un arbre qui les relie s'étend avantageusement perpendiculairement audites parois. De même, lorsque les surfaces sont importantes, une paire de parois en vis-à-vis sera avantageusement reliée par plusieurs arbres parallèles entre eux.

Pour une plus grande facilité de fabrication et pour éviter des efforts parasites transversaux sur les arbres, il est préférable que chaque arbre traverse intérieurement le réservoir sans intersection avec, ni même sans toucher, un autre arbre.

Les directions des arbres sont avantageusement perpendiculaires entre elles, pour permettre une décomposition mieux répartie des efforts de pression selon chacune des directions.

Au moins un arbre peut être creux et relié de façon continue avec les parois en vis-à-vis respectives, par deux extrémités de raccordement. Ces extrémités peuvent être de forme progressivement élargie pour son raccordement sensiblement tangentiel avec une des parois en vis-à-vis respectives, et l'arbre être de forme sensiblement cylindrique entre ses deux extrémités de raccordement. L'arbre étant creux, le réservoir peut comprendre des moyens pour stocker dudit fluide dans le creux de certains au moins parmi les arbres. Ceci est particulièrement avantageux pour le stockage de GNV, celui-ci nécessitant pour une autonomie donnée d'un véhicule, un volume supérieur à celui du GPL. On peut ainsi, par exemple, diminuer de 10% l'encombrement du réservoir, pour une même capacité de stockage.

Le réservoir peut comprendre un dispositif de remplissage comprenant une bride de remplissage et des moyens d'isolation thermique de ladite bride avec l'enceinte. La bride peut être maintenue sur une paroi de l'enceinte par des tiges de précontraintes, chacune s'étendant dans le creux d'un arbre et prenant appui sur la paroi en vis-à-vis respective.

Le réservoir peut comprendre un chemisage intérieur à l'enceinte en un matériau thermoplastique. Un tel chemisage permet d'améliorer l'étanchéité qui peut être obtenue par un matériau composite.

Le réservoir peut en outre comprendre des inserts intégrés dans le matériau de d'enceinte, notamment pour la fixation du réservoir, notamment sur un véhicule automobile.

S'il est prévu pour être monté sur un véhicule automobile, le réservoir peut avoir une forme complexe qui lui permet de s'intégrer dans des espaces normalement peu ou pas utilisés du véhicule. En particulier, il peut comprendre un passage pour un tuyau d'échappement, le réservoir entourant au moins partiellement une partie du pot.

Le fluide stocké peut consister par exemple en du Gaz Naturel pour Véhicule (GNV) ou en de l'hydrogène.

Selon un deuxième objet de l'invention, un procédé pour réaliser un tel réservoir en matériau composite.

Selon un premier mode de mise en oeuvre, un tel procédé, comprend les étapes suivantes :
- on tisse les puits à l'avance ;
- on rapporte les puits sur une préforme, avant tissage de l'enceinte, du réservoir ;
- on raccorde les puits aux parois lors du tissage des parois sur la préforme.

Selon un deuxième mode de mise en oeuvre, un tel procédé comprend les étapes suivantes :
- on tisse les puits à l'avance ;
- on tisse les parois à l'avance ;
- on raccorde les puits et les parois par piquage.

Dans l'un ou l'autres des modes de mise en oeuvre on peut réaliser la préforme, par dépôt de filaments sur la chemise du réservoir.

Une fois le tissage et les raccordements terminés, la matrice est avantageusement mise en oeuvre par injection RTM (Resin Transfer Molding, moulage par transfert de Résine) directement sur la chemise, à travers la préforme.

Pour une meilleur reprise des efforts de pression sur les parois leur tissage est avantageusement réalisé selon trois directions sensiblement coplanaires et formant entre elles des angles de 60 degrés environ.

D'autres particularités et avantages de l'invention ressortiront encore de la description ci-après, relative à des exemples non limitatifs.

Aux dessins annexés :
- la figure 1 est une illustration, partiellement écorchée d'un premier mode de réalisation pour un réservoir selon l'invention ayant des puits selon deux directions sensiblement perpendiculaires ;
- la figure 2 est une illustration, partiellement écorchée d'un deuxième mode de réalisation pour un réservoir selon l'invention ayant des puits selon trois directions sensiblement perpendiculaires ;
- la figure 3 est une vue en coupe de moyens de remplissage pour un réservoir selon l'invention ;

les figures 4 à 6 décrivent trois modes de réalisation de moyens pour stocker du fluide à l'intérieur des puits :

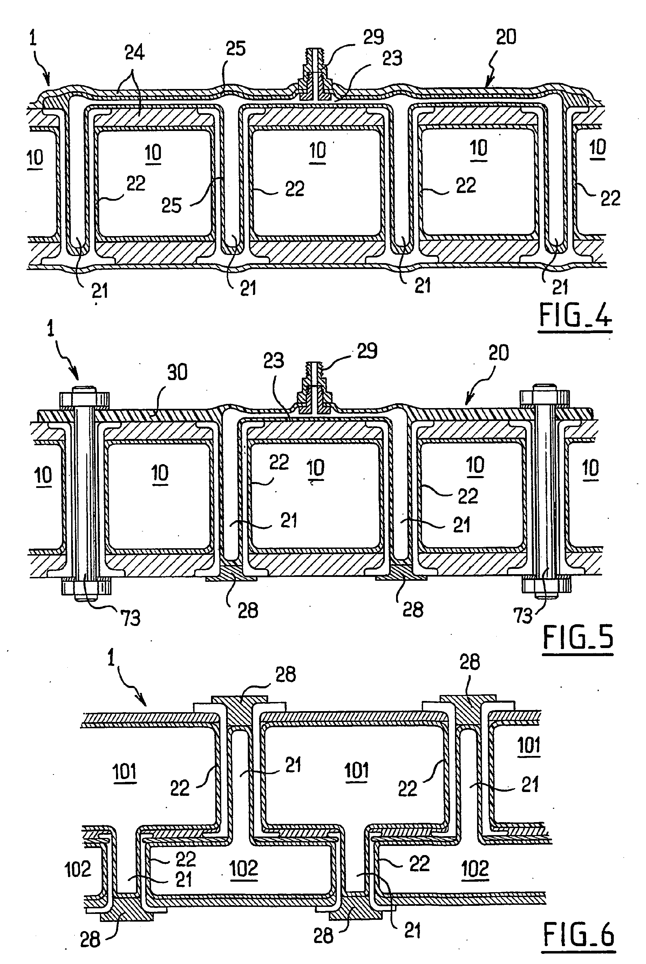

- la figure 4 est une vue partielle et en coupe d'un mode de réalisation avec distributeur intégré à l'enceinte ;
- la figure 5 est une vue partielle et en coupe d'un mode de réalisation avec distributeur rapporté sur l'enceinte ; et,
- la figure 6 est une vue partielle et en coupe d'un mode de réalisation avec deux enceintes s'emboîtant l'une dans les puits de l'autre.

Les figures se rapportent à des réservoirs pour véhicule automobile.

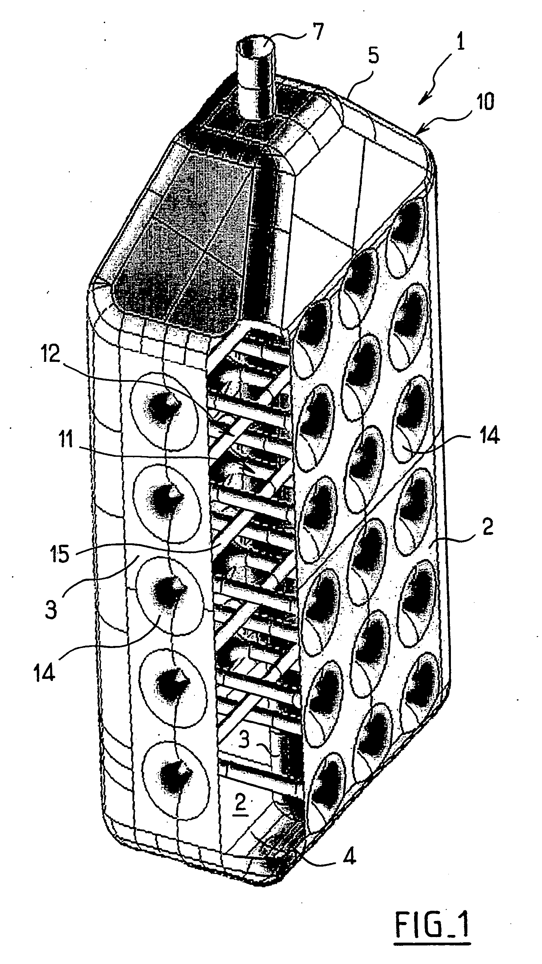

La figure 1 illustre un premier mode de réalisation pour un réservoir 1 selon l'invention. Le réservoir 1 comprend une enceinte 10 de forme sensiblement parallélépipédique. Il comprend deux parois principales 2 sensiblement rectangulaires en vis-à-vis, deux parois latérales 3 rectangulaires, plus étroites, en vis-à-vis et s'étendant entre les longs côtés de parois principales. Il comprend en outre un fond 4 s'étendant entre des petits côtés des parois principales et latérales. En vis-à-vis du fond, le réservoir a une forme d'entonnoir 5 qui s'étend entre les autres petits côtés des parois principales et latérales. Ladite forme d'entonnoir comprend en son sommet un raccord 7 pour le remplissage et/ou le raccordement du réservoir avec un moteur.

Le réservoir est écorché le long d'une jonction entre une paroi latérale 3 et une paroi principale 2, de sorte que l'on en aperçoit une partie de l'intérieur et notamment l'autre paroi principale 2, l'autre paroi latérale 3 et le fond 4.

Les parois principales 2 sont reliées entre elles par un premier ensemble de premiers puits 11 sensiblement parallèles entre eux. Les parois latérales 3 sont elles aussi reliées entre elles par un deuxième ensemble de deuxièmes puits 12 sensiblement parallèles entre eux. Ces puits 11, 12 sont des pièces tubulaires comprenant un corps central 15 essentiellement cylindrique et deux extrémités 14 en forme de pavillon de trompette, s'évasant progressivement depuis le corps central jusqu'à une paroi respective à laquelle elle se raccorde.

Pour une bonne reprise des efforts de pression, et éviter de créer des zones de ruptures au voisinage des puits, le raccordement est progressif et la surface de l'extrémité 14 en trompette est sensiblement tangente d'une part avec la paroi 2, 3 et d'autre part avec le corps central 15. En outre un rayon de courbure de cette extrémité en trompette est d'autant plus grand que les efforts de pression sont importants.

Les puits sont régulièrement répartis relativement aux parois, et perpendiculaires aux parois qu'ils relient. Ainsi, pour le premier ensemble de puits 11, ceux-ci sont répartis en trois rangs selon le petit côté des parois principales et six rangs selon leur grand côté. Pour le deuxième ensemble de puits 12 ceux-ci sont répartis en un seul rang de six puits selon le grand côté des parois latérales. Les premiers puits 11 du premier ensemble et les deuxièmes puits 12 du deuxième ensemble sont disposés de sorte que les puits d'un ensemble passe entre et à équidistance des puits de l'autre ensemble.

Aucun puits n'est relié au fond et/ou à la forme d'entonnoir.

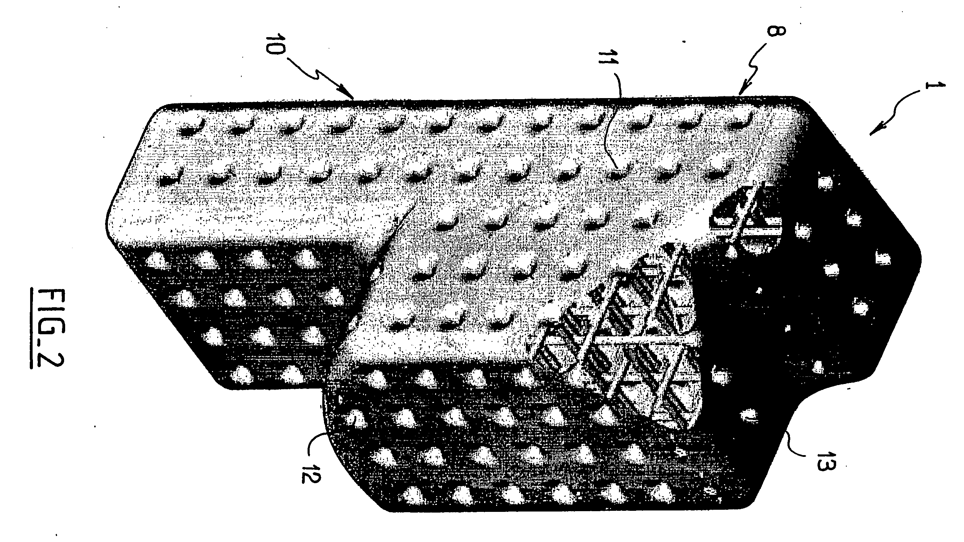

On va maintenant décrire le mode de réalisation de la figure 2 en ce qu'il diffère de celui de la figure 1.

L'enceinte du réservoir 1 de la figure 2 a une forme plus complexe, adapté à être logé de façon optimale dans un volume libre sensiblement de même forme d'un véhicule automobile. Le réservoir est formé d'un corps principal de forte épaisseur, encadré de deux corps de moindre épaisseur s'étendant depuis une paroi commune de base 8 sensiblement rectangulaire. L'ensemble des trois corps formant un même volume de stockage pour le gaz.

Compte tenu des dimensions importantes du réservoir dans le plan de la base, et aussi selon son épaisseur, trois ensembles de puits 11, 12, 13 équipent le réservoir.

Un premier ensemble de premiers puits 11, parallèles entre eux et à la paroi de base 8 relie des parois s'étendant perpendiculairement à la base 8 depuis les grands côtés de la base. Un deuxième ensemble de deuxièmes puis 12, perpendiculaires aux premiers, relie d'autres parois s'étendant perpendiculairement à la base 8. Enfin, un troisième ensemble de troisièmes puits 13 relie la base 8 avec les parois qui lui sont en vis-à-vis et sensiblement parallèles.

Comme pour ceux de la figure 1, les puits sont régulièrement répartis relativement aux parois, et perpendiculaires aux parois qu'ils relient. Comme on peut l'apercevoir à travers l'écorché de la figure 2, Les premiers puits 11 du premier ensemble, les deuxièmes puits 12 du deuxième ensemble et les troisièmes puits 13 du troisième ensemble sont disposés de sorte que les puits d'un ensemble passe entre et à équidistance des puits des autres ensembles.

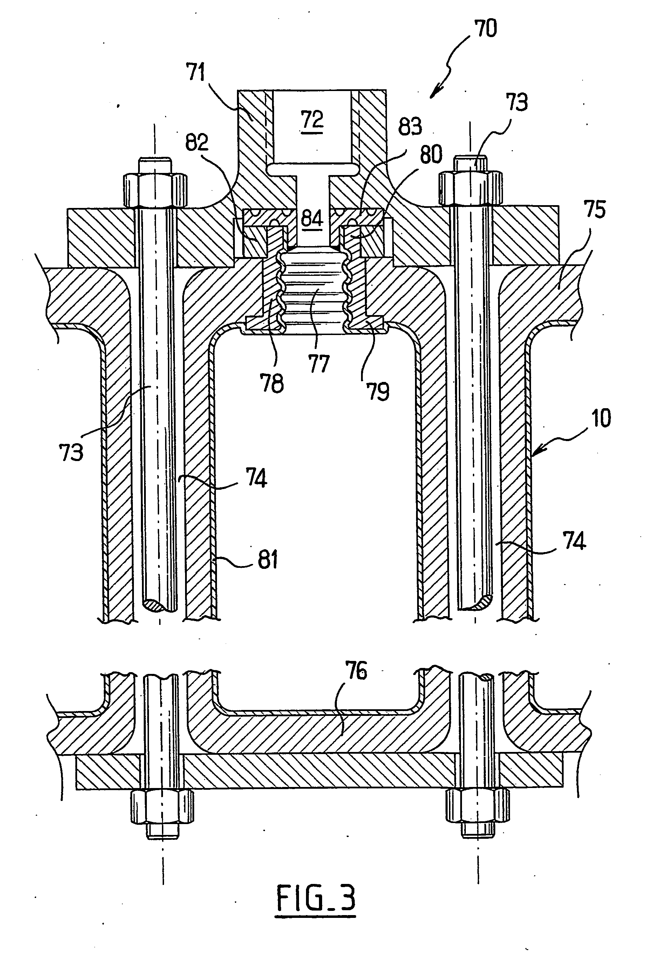

On va maintenant décrire un dispositif de remplissage pour un réservoir selon l'invention en référence à la figure 3.

Le GNV est prévu pour être stocké sous forme gazeuse dans le réservoir. Il est donc particulièrement important que celui-ci ne soit pas soumis à une forte augmentation de température (en particulier en cas d'incendie) qui engendrerait une augmentation notable de la pression dans l'enceinte, augmentation de pression qui serait susceptible d'aboutir à l'explosion de l'enceinte.

La figure 3 décrit un dispositif de remplissage 70 comprenant des moyens d'isolation thermique avec une enceinte 10.

Le dispositif de remplissage comprend une bride de remplissage 71 métallique, par exemple en aluminium. Cette bride comprend un orifice de branchement traversant 72 équipé pour y brancher une arrivée de gaz (non représentée). La bride est maintenue plaquée sur une première paroi 75 le réservoir par des tiges 73 s'étendant chacune dans un puits respectif 74, chaque tige étant en outre en appui sur une deuxième paroi 76 du réservoir, opposée à la première paroi 75.

Un orifice de pénétration 77 traverse la première paroi 75 dans le prolongement de l'orifice de remplissage 72. Cet orifice de pénétration est intérieurement gainé par un tube 78 en matériau thermiquement isolant. Le tube comprend un épaulement annulaire 79 pour l'appui du 78 sur l'intérieur de la première paroi 75, et un partie 80 extérieure à la paroi 75. Une chemise 81 habillant l'intérieur de l'enceinte 10 se prolonge sur l'intérieur du tube 78, habillant ainsi les parois de l'orifice de pénétration 77.

Un anneau 82 en matériau thermiquement isolant entoure la partie extérieure 80 du tube 78.

Une pièce d'étanchéité 83 essentiellement annulaire définit un orifice de liaison 84 entre l'orifice de remplissage 72 et l'orifice de pénétration 77. les trois orifices 72, 77, 84 étant chacun dans le prolongement axial l'un de l'autre et continus entre eux pour le passage du gaz depuis l'arrivée de gaz jusque dans l'enceinte 10. La pièce d'étanchéité est d'une part en appui sur une face de la bride et d'autre par en appui sur des faces axialement opposées de l'anneau 82 et de la partie extérieure 80 du tube 77.

Le dispositif de remplissage peut aussi servir à la vidange du réservoir.

En référence aux figures 4 à 6, on va maintenant décrire des moyens pour optimiser 20 le stockage du gaz, en utilisant un volume intérieur aux puits afin d'y stocker du gaz.

Les moyens d'optimisation 20 du mode de réalisation de la figure 4 comprennent des poches 21 pour le gaz. Ces poches sont de forme sensiblement tubulaires et s'insèrent dans les volumes intérieurs de puits 21 du réservoir. Les poches sont reliées, chacune par une des ses extrémités, à un distributeur 23. Le distributeur est formé dans une double paroi 24 de l'enceinte 10, que nous nommerons ici principale pour plus de clarté, du réservoir 1.

Des parois intérieures 25 du distributeur et des poches sont continues entre elles de façon à former une enceinte secondaire 21, 23 étanche. Ces parois peuvent être en un matériau thermoplastique. La paroi intérieure 25 du distributeur 23 habille l'intérieur des deux parties de la paroi double 24 de l'enceinte principale 10.

Un dispositif de raccordement 29, monté une partie extérieure de la paroi double 24, équipe le distributeur 23. Ce dispositif de remplissage 70 permet le branchement d'un tuyau pour mettre en relation l'enceinte secondaire 21, 23 avec l'enceinte principale 10, afin qu'elles forment ensemble un même volume de stockage pour le GNV.

On va maintenant décrire les moyens d'optimisation 20 de la figure 5 en ce qu'ils diffèrent de ceux de la figure 4.

A la figure 5, les poches et le distributeur forment ensemble une seul pièce 30 indépendante de l'enceinte principale 10 et portant un dispositif de raccordement 29 pour relier l'enceinte secondaire avec l'enceinte principale 10. La pièce 30 est montée par emboîtement des poches 21 dans les puits 22, puis est bridée sur l'enceinte principale 10 à l'aide de tiges 73, de façon similaire à celle précédemment décrite pour le dispositif de remplissage de la figure 3. Dans l'exemple illustré, les parois de la pièce 30 sont en en un matériau thermoplastique.

Pour protéger une extrémité libre de chaque poche 21, un bouchon 28 est monté sur l'extrémité voisine du puits respectif.

On va maintenant décrire les moyens d'optimisation de la figure 6 en ce qu'ils diffèrent de ceux des figures 4 et 5.

Le réservoir 1 de la figure 6 comprend deux enceintes 101,102 de formes similaires et complémentaires. Chaque enceinte 101, 102 comprend des extensions sous forme de poches 21, les poches de l'une des enceintes 101, 102, étant prévues pour s'emboîter dans des puits respectifs de l'autre enceinte 102, 101. Les deux enceintes sont reliées entre elles, par des moyens non représentés, pour ne former qu'un même volume de stockage pour le gaz.

A titre d'exemple, et sans que cela soit limitatif, le corps du réservoir peut être fait avec toutes sortes de fibres telles que par exemple des fibres de carbone, de verre, d'aramide, métalliques, hybrides, dans une matrice époxyde.

La chemise est avantageusement en un matériau thermoplastique. La chemise peut être du type en matériau plastique, par exemple du polyéthylène. La chemise peut aussi être du type "double peaux" ou "triple peaux", plus léger et plus étanche.

Une préforme de l'enceinte peut être réalisée par dépôt de filaments sur la chemise servant de mandrin.

Selon un premier procédé de fabrication, les puits peuvent être tissés d'avance puis rapportés sur la préforme, avant tissage de l'enceinte du réservoir. Les puits sont ensuite intégrés et raccordés aux parois lors du tissage des parois sur la préforme.

Selon un deuxième procédé de fabrication, les puits et les parois de l'enceinte sont chacun tissés à l'avance. Ensuite, les puits sont raccordés par piquage aux parois ainsi tissées.

Dans les deux procédés, la matrice peut ensuite être mise en oeuvre par injection RTM (Resin Transfer Molding, moulage par transfert de Résine) directement sur la chemise, à travers la préforme. La chemise, restant en place, remplace avantageusement une vessie de moulage.

Bien sûr, l'invention n'est pas limitée aux exemples qui viennent d'être décrits et de nombreux aménagements peuvent être apportés à ces exemples sans sortir du cadre de l'invention.

En particulier, il est possible d'utiliser un tel type de réservoir pour d'autres fluides que du GNV.

Plutôt qu'en matériau composite, l'enceinte peut notamment être en métal et les puits y être raccordés par soudure.

En particulier si la forme du réservoir est complexe, ce qui peut être le cas dans un véhicule automobile si l'on veut conserver un maximum de place pour les passagers et/ou les bagages, outre les trois directions perpendiculaires, il peut être prévu des arbres selon d'autres directions.

## Revendications

1. Réservoir (1) comprenant une enceinte (10) interne pour y stocker un fluide, ladite enceinte (10) comprenant au moins une paire de parois (2) en vis-à-vis reliées intérieurement par au moins un premier arbre (11), et au moins une deuxième paire de parois (3) en vis-à-vis reliées intérieurement par au moins un deuxième arbre (12), ledit premier arbre (11) s'étendant selon une première direction et ledit deuxième arbre (12) s'étendant selon une deuxième direction différente de la première, **caractérisé en ce que** l'enceinte (10) et les arbres (11, 12) sont en matériau composite, l'enceinte (10) étant obtenue par tissage d'une préforme sur laquelle sont rapportés les arbres creux (11,12).

2. Réservoir (1) selon la revendication 1, **caractérisé en ce que** la première direction est perpendiculaire à la deuxième direction.

3. Réservoir (1) selon la revendication 1 ou 2, **caractérisé en ce que** l'enceinte (10) comprend au moins une troisième paire de parois en vis-à-vis reliées intérieurement par au moins un troisième arbre (13), ledit troisième arbre s'étendant selon une troisième direction différente de la première direction et de la deuxième direction, telle que perpendiculaire à celles-ci.

4. Réservoir (1) selon la revendication 2 ou 3, **caractérisé en ce que** les parois (2, 3) d'au moins une desdites paires de parois (2, 3) en vis-à-vis sont parallèles entre elles, et **en ce que** l'au moins un arbre (11, 12, 13) qui les relie s'étend perpendiculairement auxdites parois.

5. Réservoir (1) selon l'une des revendications 2 à 4, **caractérisé en ce qu'**au moins une desdites paires de parois (2, 3) en vis-à-vis est reliée par plusieurs arbres (11, 12, 13) parallèles entre eux.

6. Réservoir (1) selon l'une des revendications 2 à 5, **caractérisé en ce que** chaque arbre (11, 12, 13) traverse intérieurement le réservoir (1) sans intersection avec un autre arbre (11, 12, 13).

7. Réservoir (1) selon l'une des revendications 1 à 6, **caractérisé en ce qu'**au moins un arbre (11, 12, 13) est creux et relié de façon continue avec les parois (2, 3) en vis-à-vis respectives, par deux extrémités (14) de raccordement.

8. Réservoir (1) selon la revendication 7, **caractérisé en ce que** ledit au moins un arbre (11, 12, 13) comprend une extrémité (14) ayant une forme progressivement élargie pour son raccordement sensiblement tangentiel avec une des parois (2, 3) en vis-à-vis respectives.

9. Réservoir (1) selon la revendication 7 ou 8, **caractérisé en ce que** ledit au moins un arbre (2, 3) est de forme sensiblement cylindrique entre ses deux extrémités (14) de raccordement.

10. Réservoir (1) selon l'une des revendications 7 à 9, **caractérisé en ce qu'**il comprend des moyens d'optimisation (20) pour stocker dudit fluide dans le creux (21) de certains au moins parmi les arbres.

11. Réservoir (1) selon l'une des revendications 7 à 10, **caractérisé en ce qu'**il comprend un dispositif de remplissage (70), ledit dispositif de remplissage comprenant une bride de remplissage (71) et des moyens d'isolation thermique de ladite bride avec l'enceinte (10).

12. Réservoir (1) selon la revendication 11, **caractérisée en ce que** la bride (71) est maintenue sur une paroi (75) de l'enceinte (10) par des tiges (73) de précontrainte, chacune s'étendant dans le creux (74) d'un arbre et prenant appui sur la paroi (75) en vis-à-vis respective.

13. Réservoir (1) selon l'une des revendications 1 à 12, **caractérisé en ce qu'**il comprend une chemise en un matériau thermoplastique.

14. Réservoir (1) selon l'une des revendications 1 à 13, **caractérisé en ce qu'**il comprend des inserts intégrés dans le matériau de l'enceinte (10), notamment pour la fixation du réservoir (1), notamment sur un véhicule automobile.

15. Réservoir (1) selon l'une des revendications 1 à 14, **caractérisé en ce qu'**il est prévu pour être monté sur un véhicule automobile et comprend un passage pour un tuyau d'échappement.

16. Réservoir (1) selon l'une des revendications 1 à 15, **caractérisé en ce que** le fluide consiste en du Gaz Naturel pour Véhicule (GNV).

17. Réservoir (1) selon l'une des revendications 1 à 16, **caractérisé en ce que** le fluide consiste en de l'hydrogène.

18. Procédé pour réaliser un réservoir (1) comprenant une enceinte (10) interne en matériau composite pour y stocker un fluide, ladite enceinte (10) comprenant au moins une paire de parois (2) en vis-à-vis reliées intérieurement par au moins un premier arbre (11) en matériau composite, et au moins une deuxième paire de parois (3) en vis-à-vis reliées intérieurement par au moins un deuxième arbre (12), ledit premier arbre (11) s'étendant selon une première direction et ledit deuxième arbre (12) s'étendant selon une deuxième direction différente de la première, au moins l'un des arbres (11, 12) étant creux et relié de façon continue avec les parois (2, 3) en vis-à-vis respectives, par deux extrémités (14) de raccordement, le réservoir (1) étant en outre conforme à l'une quelconque des revendications 8 à 17, le procédé comprenant les étapes suivantes :
- on tisse les arbres creux (11, 12,13) à l'avance ;
- on rapporte les arbres creux (11, 12, 13) sur une préforme, avant tissage de l'enceinte (10) du réservoir (1) ;
- on raccorde les arbres creux (11, 12, 13) aux parois (2, 3) lors du tissage des parois sur la préforme.

19. Procédé pour réaliser un réservoir (1) comprenant une enceinte (10) interne en matériau composite pour y stocker un fluide, ladite enceinte (10) comprenant au moins une paire de parois (2) en vis-à-vis reliées intérieurement par au moins un premier arbre (11) en matériau composite, et au moins une deuxième paire de parois (3) en vis-à-vis reliées intérieurement par au moins un deuxième arbre (12), ledit premier arbre (11) s'étendant selon une première direction et ledit deuxième arbre (12) s'étendant selon une deuxième direction différente de la première, au moins l'un des arbres étant creux et relié de façon continue avec les parois en vis-à-vis respectives, par deux extrémités (14) de raccordement, le réservoir (1) étant en outre conforme à l'une quelconque des revendications 8 à 17, le procédé comprenant les étapes suivantes :
- on tisse les arbres creux (11, 12, 13) à l'avance ;
- on tisse les parois (2, 3) à l'avance ;
- on raccorde les arbres creux et les parois par piquage.

20. Procédé selon la revendication 18 ou 19, **caractérisé en ce que** l'on réalise la préforme, par dépôt de filaments sur une chemise du réservoir (1).

21. Procédé selon la revendication 20, **caractérisé en ce que** la matrice est ensuite mise en oeuvre par injection RTM (Resin Transfer Molding, moulage par transfert de Résine) directement sur la chemise, à travers la préforme.

22. Procédé selon l'une des revendications 18 à 21, **caractérisé en ce que** les parois sont réalisées par tissage selon trois directions sensiblement coplanaires et formant entre elles des angles de 60 degrés environ.

## Patentansprüche

1. Tank (1) aufweisend: Eine interne Kammer (10) um dort eine Flüssigkeit zu speichern, wobei besagte Kammer (10) mindestens ein Paar gegenüberliegender Wände (2), die innen durch mindestens eine ersten Strebe (11) verbunden sind, und mindestens ein zweites Paar gegenüberliegender Wände (3), die innen durch mindestens eine zweite Strebe (12) verbunden sind, aufweist, wobei sich die genannte erste Strebe (11) in eine erste Richtung erstreckt und sich die zweite Strebe (12) in eine zweite, von der ersten Richtung verschiedene Richtung erstreckt, wobei die Kammer (10) und die Streben (11, 12) aus Verbundmaterial bestehen und die Kammer (10) durch Umweben einer Vorform, an der die hohlen Streben (11, 12) angestückt sind, erhalten ist.

2. Tank (1) gemäß Anspruch 1, **dadurch gekennzeichnet, dass** die erste Richtung senkrecht zur zweiten Richtung steht.

3. Tank (1) gemäß Anspruch 1 oder 2, **dadurch gekennzeichnet, dass** die Kammer (10) mindestens ein drittes Paar gegenüberliegender Wände aufweist, die innen durch mindestens eine dritte Strebe (13) verbunden sind, wobei sich diese dritte Strebe in eine dritte, von der ersten und zweiten Richtung verschiedene, insbesondere zu diesen senkrechte Richtung erstreckt.

4. Tank (1) gemäß Anspruch 2 oder 3, **dadurch gekennzeichnet, dass** die Wände (2, 3) mindestens eines Paares der besagten gegenüberliegenden Wände (2, 3) parallel zueinander verlaufen und dass sich die mindestens eine Strebe (11, 12, 13), die sie verbindet, senkrecht zu diesen Wänden erstreckt.

5. Tank (1) gemäß einem der Ansprüche 2 bis 4, **dadurch gekennzeichnet, dass** mindestens ein der besagten Paare gegenüberliegender Wände (2, 3) durch mehrere Streben (11, 12, 13), die untereinander parallel verlaufen, verbunden ist.

6. Tank (1) gemäß einem der Ansprüche 2 bis 5, **dadurch gekennzeichnet, dass** jede Strebe (11, 12, 13) den Tank (1) innen durchquert ohne eine andere Strebe (11, 12, 13) zu schneiden.

7. Tank (1) gemäß einem der Ansprüche 1 bis 6, **dadurch gekennzeichnet, dass** mindestens eine Strebe (11, 12, 13) hohl und jeweils kontinuierlich mit den gegenüberliegenden Wänden (2, 3) durch zwei zum Anschluss dienende Endstücke (14) verbunden ist.

8. Tank (1) gemäß Anspruch 7, **dadurch gekennzeichnet, dass** die genannte mindestens eine Strebe (11,12, 13) ein Endstück (14) umfasst, dessen Form sich allmählich für einen etwa tangentialen Anschluss an eine der gegenüberliegenden Wände (2, 3) verbreitert.

9. Tank (1) gemäß Anspruch 7 oder 8, **dadurch gekennzeichnet, dass** mindestens eine Strebe (2, 3) eine etwa zylindrische Form zwischen seinen beiden zum Anschluss dienenden Endstücken (14) hat.

10. Tank (1) gemäß einem der Ansprüche 7 bis 9, **dadurch gekennzeichnet, dass** er Mittel zur Optimierung (20) umfasst, um die besagte Flüssigkeit im Hohlraum (21) wenigstens einiger der Streben zu speichern.

11. Tank (1) gemäß einem der Ansprüche 7 bis 10, **dadurch gekennzeichnet, dass** er eine Füllvorrichtung (70) umfasst, die einen Füllflansch (71) und eine thermische Isolierung dieses Flansches mit der Kammer (10) umfasst.

12. Tank (1) gemäß Anspruch 11, **dadurch gekennzeichnet, dass** der Flansch auf einer Wand (75) der Kammer (10) durch vorgespannte Stangen (73) gehalten wird, die sich jeweils durch den Hohlraum (74) einer Strebe erstrecken und auf der jeweiligen gegenüberliegenden Wand (75) fest abgestützt sind.

13. Tank (1) gemäß einem der Ansprüche 1 bis 12, **dadurch gekennzeichnet, dass** er einen Mantel aus thermoplastischem Material aufweist.

14. Tank (1) gemäß einem der Ansprüche 1 bis 13, **dadurch gekennzeichnet, dass** er in das Material der Kammer (10) integrierte Einsätze aufweist, insbesondere zur Befestigung des Tanks (1) in einem Kraftfahrzeug.

15. Tank (1) gemäß einem der Ansprüche 1 bis 14, **dadurch gekennzeichnet, dass** er zum Einbau in ein Kraftfahrzeug bestimmt ist und einen Raum zur Führung eines Auspuffrohres umfasst.

16. Tank (1) gemäß einem der Ansprüche 1 bis 15, **dadurch gekennzeichnet, dass** die Flüssigkeit aus Erdgas für Fahrzeuge besteht.

17. Tank (1) gemäß einem der Ansprüche 1 bis 16, **dadurch gekennzeichnet, dass** die Flüssigkeit aus Wasserstoff besteht.

18. Verfahren zur Herstellung eines Tanks (1), der eine interne Kammer (10) aus Verbundmaterial zur dortigen Speicherung einer Flüssigkeit aufweist, wobei die besagte Kammer mindestens ein Paar gegenüberliegender Wände (2), die innen durch mindestens eine erste Strebe (11) aus Verbundmaterial verbunden sind, und mindestens ein zweites Paar gegenüberliegender Wände (3), die innen durch mindestens eine zweite Strebe (12) verbunden sind, aufweist, wobei sich die erste Strebe (11) in eine erste Richtung erstreckt und sich die zweite Strebe (12) in eine zweite, von der ersten verschiedene Richtung erstreckt und mindestens eine Strebe (11, 12) hohl ist und kontinuierlich mit den jeweiligen gegenüberliegenden Wänden (2, 3) durch zwei zum Anschluss dienende Endstücke (14) verbunden ist, und der Tank darüber hinaus konform mit einem der Ansprüche 8 bis 17 ist, umfassend folgende Schritte:
- Weben der hohlen Streben (11, 12, 13) im Voraus;
- Anstücken der hohlen Streben (11, 12, 13) auf eine Vorform vor dem Weben der Kammer (10) des Tanks (1);
- Verbinden der hohlen Streben (11, 12, 13) an die Wände (2, 3) während des Webens der Wände auf die Vorform.

19. Verfahren zur Herstellung eines Tanks (1), der eine interne Kammer (10) aus Verbundmaterial zur dortigen Speicherung einer Flüssigkeit aufweist, wobei die besagte Kammer mindestens ein Paar gegenüberliegender Wände (2), die innen durch mindestens eine erste Strebe (11) aus Verbundmaterial verbunden sind, und mindestens ein zweites Paar gegenüberliegender Wände (3), die innen durch mindestens eine zweite Strebe (12) verbunden sind, aufweist, wobei sich die erste Strebe (11) in eine erste Richtung erstreckt und sich die zweite Strebe (12) in eine zweite, von der ersten Richtung verschiedene Richtung erstreckt und wobei mindestens eine Strebe hohl ist und kontinuierlich mit den jeweiligen gegenüberliegenden Wänden (2, 3) durch zwei zum Anschluss dienende Endstücke (14) verbunden ist, und der Tank darüber hinaus konform mit einem der Ansprüche 8 bis 17 ist, umfassend folgende Schritte:
- Weben der hohlen Streben (11, 12, 13) im Voraus;
- Weben der Wände (2, 3) im Voraus;
- Verbinden der hohlen Streben mit den Wänden durch Nähen.

20. Verfahren gemäß einem der Ansprüche 18 oder 19, **dadurch gekennzeichnet, dass** die Vorform durch das Deponieren von Filamenten auf einem Mantel (1) des Tanks (1) hergestellt wird.

21. Verfahren gemäß Anspruch 20, **dadurch gekennzeichnet, dass** die Matrix anschließend durch RTM-Injektion (Resin Transfer Molding, Harz-Transfer-Formen) direkt auf den Mantel durch die Vorform hindurch erzeugt wird.

22. Verfahren gemäß einem der Ansprüche 18 bis 21, **dadurch gekennzeichnet, dass** die Wände durch Weben in drei im Wesentlichen komplanare Richtungen, welche untereinander in einem Winkel von ca. 60 Grad stehen, erzeugt werden.

## Claims

1. Tank (1) comprising an inner chamber (10) for storing therein a fluid, said chamber (10) comprising at least one pair of opposite walls (2) internally connected by at least one first shaft (11), and at least one second pair of opposite walls (3) internally connected by at least one second shaft (12), said first shaft (11) extending along a first direction and said second shaft (12) extending along a second direction different from the first, **characterized in that** the chamber (10) and the shafts (11, 12) are made from a composite material, the chamber (10) being produced by weaving a preform to which the hollow shafts (11, 12) are attached.

2. Tank (1) according to claim 1, **characterized in that** the first direction is perpendicular to the second direction.

3. Tank (1) according to claim 1 or 2, **characterized in that** the chamber (10) comprises at least one third pair of opposite walls internally connected by at least one third shaft (13), said third shaft extending along a third direction different from the first direction and from the second direction, such as perpendicular to them.

4. Tank (1) according to claim 2 or 3, **characterized in that** the walls (2, 3) of at least one of said pairs of opposite walls (2, 3) are parallel to one another and **in that** the at least one shaft (11, 12, 13) connecting them extends perpendicular to said walls.

5. Tank (1) according to one of claims 2 to 4, **characterized in that** at least one of said pairs of opposite walls (2, 3) is connected by several shafts (11, 12, 13) parallel to one another.

6. Tank (1) according to one of claims 2 to 5, **characterized in that** each shaft (11, 12, 13) passes through the tank (1) internally without intersecting with another shaft (11, 12, 13).

7. Tank (1) according to one of claims 1 to 6, **characterized in that** at least one shaft (11, 12, 13) is hollow and connected continuously with the respective opposite walls (2, 3) by two connecting ends (14).

8. Tank (1) according to claim 7, **characterized in that** said at least one shaft (11, 12, 13) comprises one end (14) having a progressively widened shape for connecting substantially tangentially with one of the respective opposite walls (2, 3).

9. Tank (1) according to claim 7 or 8, **characterized in that** said at least one shaft (2, 3) is substantially cylindrical in shape between its two connecting ends (14).

10. Tank (1) according to one of claims 7 to 9, **characterized in that** it comprises optimization means (20) for storing said fluid in the cavity (21) of at least some of the shafts.

11. Tank (1) according to one of claims 7 to 10, **characterized in that** it comprises a filling device (70), said filling device comprising a filling flange (71) and means for thermal insulation of said flange with the chamber (10).

12. Tank (1) according to claim 11, **characterized in that** the flange (71) is held on a wall (75) of the chamber (10) by pre-tensioned rods (73), each extending into the cavity (74) of a shaft and resting on the respective opposite wall (75).

13. Tank (1) according to one of claims 1 to 12, **characterized in that** it comprises a jacket made from a thermoplastic material.

14. Tank (1) according to one of claims 1 to 13, **characterized in that** it comprises inserts integrated into the material of the chamber (10), in particular for fixing the tank (1), in particular on a motor vehicle.

15. Tank (1) according to one of claims 1 to 14, **characterized in that** it is intended to be mounted on a motor vehicle and comprises an opening for an exhaust pipe.

16. Tank (1) according to one of claims 1 to 15, **characterized in that** the fluid consists of Natural Gas for Vehicles (NGV).

17. Tank (1) according to one of claims 1 to 16, **characterized in that** the fluid consists of hydrogen.

18. Method for producing a tank (1) comprising an inner chamber (10) made from a composite material for storing therein a fluid, said chamber (10) comprising at least one pair of opposite walls (2) internally connected by at least one first shaft (11) made from a composite material, and at least one second pair of opposite walls (3) internally connected by at least one second shaft (12), said first shaft (11) extending along a first direction and said second shaft (12) extending along a second direction different from the first, at least one of the shafts (11, 12) being hollow and connected continuously with the respective opposite walls (2, 3) by two connecting ends (14), the tank (1) also conforming with any one of claims 8 to 17, the method comprising the following steps:
- the hollow shafts (11, 12, 13) are woven in advance;
- the hollow shafts (11, 12, 13) are attached to a preform, before weaving the chamber (10) of the tank (1);
- the hollow shafts (11, 12, 13) are connected to the walls (2, 3) during weaving of the walls on the preform.

19. Method for producing a tank (1) comprising an inner chamber (10) made from a composite material for storing therein a fluid, said chamber (10) comprising at least one pair of opposite walls (2) internally connected by at least one first shaft (11) made from a composite material, and at least one second pair of opposite walls (3) internally connected by at least one second shaft (12), said first shaft (11) extending along a first direction and said second shaft (12) extending along a second direction different from the first, at least one of the shafts being hollow and connected continuously with the respective opposite walls by two connecting ends (14), the tank (1) also conforming with any one of claims 8 to 17, the method comprising the following steps:
- the hollow shafts (11, 12, 13) are woven in advance;
- the walls (2, 3) are woven in advance;
- the hollow shafts and the walls are connected by stitching.

20. Method according to claim 18 or 19, **characterized in that** the preform is produced by depositing filaments on a jacket of the tank (1).

21. Method according to claim 20, **characterized in that** the matrix is then applied by RTM injection (Resin Transfer Moulding) directly onto the jacket through the preform.

22. Method according to one of claims 18 to 21, **characterized in that** the walls are produced by weaving along three substantially coplanar directions and forming angles of about 60 degrees between them.
